# FASCICULE DE BREVET EUROPEEN

(11) **EP 3 037 838 B1**
(45) Date de publication et mention de la délivrance du brevet: **14.03.2018**
(21) Numéro de dépôt: 15200967.6
(22) Date de dépôt: 17.12.2015
(51) Int. Cl.: H04W 64/00, G01S 5/02

(54) **PROCÉDÉ DE LOCALISATION D'UN TERMINAL CONNECTÉ À UN RÉSEAU CELLULAIRE DE TÉLÉCOMMUNICATIONS**
LOKALISIERUNGSVERFAHREN EINES ENDGERÄTS, DAS AN EIN MOBILFUNKNETZ ANGESCHLOSSEN IST
METHOD FOR LOCATING A TERMINAL CONNECTED TO A CELLULAR TELECOMMUNICATIONS NETWORK

(30) Priorité: 24.12.2014 FR 1463338
(43) Date de publication de la demande: 29.06.2016
(73) Titulaire: Orange, 75015 Paris (FR)
(72) Inventeur: COLLET, Yann, 92794 ISSY LES MOULINEAUX CEDEX 9 (FR); BANDIN, Stéphane, 14000 CAEN (FR)
(74) Mandataire: Cabinet Plasseraud

(56) Documents cités:
- WO-A2-99/62284
- US-A1- 2003 119 524
- US-A1- 2012 295 641

## Description

La présente invention appartient au domaine de la localisation de terminaux reliés à un réseau de télécommunications cellulaires. Elle concerne en particulier un procédé de localisation exploitant un historique des cellules visitées par un terminal.

Cette méthode est particulièrement avantageuse dans le cas de terminaux comportant une carte UICC, pour « *Universal Integrated Circuit Card* » en anglais, dans laquelle est stocké cet historique.

On entend par « carte UICC » toute carte comprenant un microcontrôleur et de la mémoire. Elle peut être utilisée en téléphonie mobile pour stocker les informations spécifiques à l'abonné d'un réseau mobile. La norme ETSI TR 102 216 donne des précisions sur une telle carte UICC. Une carte UICC peut comprendre une application SIM, pour *« Subscriber Identity Module* » en anglais ; USIM, pour « *Universal Subscriber Identity Module* » en anglais ou encore ISIM, pour « *IP Multimedia Services Identity Module* » en anglais.

On entend par « cellule » une zone géographique couverte par au moins une antenne d'un réseau, par exemple de téléphonie mobile. Typiquement, une cellule est couverte par une station de base qui comporte au moins une antenne à partir de laquelle sont reliés des terminaux dudit réseau. Le réseau est par exemple un réseau de téléphonie mobile GSM, pour *« Global System for Mobile communications* » ; UMTS, pour « *Universal Mobile Telecommunications System* » en anglais ou encore LTE, pour « *Long Term Evolution* » en anglais.

La multiplication des terminaux équipés de systèmes de localisation dédiés, de type GPS, pour « *Global Positioning System* » en anglais, a pour conséquence que ces terminaux sont désormais légion, il reste néanmoins de nombreuses applications où il n'est pas pertinent d'intégrer de tels systèmes dédiés aux terminaux. Ainsi, les terminaux de paiement, les téléphones mobiles à bas coûts, une carte à puce comportant une carte UICC ou encore divers objets connectés sont reliés à un réseau cellulaire de télécommunication mais ne disposent pas de composants spécifiquement dédiés à leur localisation, notamment en raison de l'encombrement et du coût de ces composants.

La possibilité de localiser un terminal reste toutefois une option très recherchée, quelle que soit l'application envisagée pour ce terminal. Typiquement, cette option peut faciliter la recherche d'un terminal égaré. En outre, un opérateur de réseau cellulaire peut avoir intérêt à connaitre en temps réel la répartition géographique des différents terminaux connectés à son réseau. Ceci peut par exemple lui permettre de calibrer dynamiquement les équipements réseau qu'il administre aux variations de charges sur un territoire donné.

Certains paramètres réseau disponibles au niveau d'un terminal peuvent être utilisés pour localiser ce terminal. Typiquement, l'identifiant de la cellule dans laquelle le terminal est localisé est disponible au niveau d'un terminal relié à un réseau cellulaire et peut être utilisé pour localiser le terminal.

En particulier, lorsque le terminal se déplace d'une cellule à une cellule voisine, l'identifiant de la nouvelle cellule est rapidement disponible au niveau du terminal. On appelle « *handover* », pour transfert intercellulaire en français, la situation dans laquelle le terminal se déplace d'une cellule à l'autre, qu'une communication soit en cours ou non pendant le transfert.

Typiquement, l'identifiant de la cellule est envoyé en mode « *broadcast* », pour « diffusion » en français, par la station de base couvrant la cellule. Les canaux utilisés pour la transmission de cet identifiant sont des canaux de synchronisation, de type SCH, pour *« Synchronization Channel* » en anglais. Les canaux P-SCH (*Primary Synchronization Channel*) ou S-SCH (*Secondary Synchronization Channel*), sont typiquement utilisés pour envoyer l'identifiant de cellule dans un réseau UMTS.

On appelle « cellule courante », la cellule dans laquelle est situé le terminal à un instant considéré.

Le terminal peut alors récupérer des coordonnées de localisation de cette cellule courante à partir de l'identifiant de cellule. Pour ce faire, il émet une requête comportant l'identifiant de la cellule courante à destination d'un serveur comportant un référentiel d'identifiants de cellules. Ce référentiel d'identifiants de cellules stocke des coordonnées de localisation pour chaque identifiant de cellule. Une réponse à la requête comportant les coordonnées de localisation de la cellule courante est alors renvoyée par le serveur au terminal.

A partir de ces coordonnées de localisation de la cellule, le terminal peut déterminer approximativement sa localisation. Typiquement, le terminal détermine qu'il est situé dans un voisinage des coordonnées de localisation de la cellule courante. Ces coordonnées de localisation de la cellule courante correspondent fréquemment aux coordonnées de localisation de la station de base couvrant la cellule courante.

Cette solution n'est toutefois pas satisfaisante en termes de fiabilité. Dans de nombreuses situations détaillées ci-dessous, la récupération de coordonnées de localisation de la cellule courante est en effet impossible.

Il est par exemple possible que le référentiel d'identifiants de cellules ne soit pas à jour des identifiants de toutes les cellules du réseau. En effet, au fur et à mesure du déploiement de nouvelles stations de base au sein du réseau, de nombreuses nouvelles cellules sont créées et la mise à jour du référentiel n'est pas faite en temps réel.

Il est également possible qu'une antenne mobile événementielle soit mise en place pour couvrir un événement exceptionnel. Cette antenne mobile événementielle fait office de station de base temporaire. Or, la mobilité de cette station de base temporaire rend impossible le stockage de coordonnées de localisation, pour l'identifiant associé à cette station de base temporaire, qui soient actualisées au sein du référentiel. L'identifiant de cellule transmis par cette antenne mobile événementielle ne peut donc pas être associé à des coordonnées de localisation qui correspondent effectivement à la localisation temporaire de l'antenne.

Le terminal peut également avoir des problèmes pour récupérer l'identifiant de la cellule courante. Cette situation peut par exemple se produire si la qualité de service (QoS - *Quality of Service*) de la transmission entre le terminal et la station de base couvrant la cellule courante est très mauvaise, et en particulier la transmission via des canaux P-SCH et S-SCH dans le cas d'un réseau UMTS. Dans cette situation, il est en effet possible que les trames envoyées par la station de base à destination du terminal et comportant l'identifiant de la cellule courante ne soient pas correctement transmises et ne puissent donc pas être décodées par le terminal.

Dans ces situations où il n'est pas possible de récupérer de coordonnées de localisation de la cellule courante, aucune information de localisation n'est disponible. Aucune information de localisation du terminal ne peut donc être fournie à un utilisateur. Ainsi, à un instant donné, si les coordonnées de localisation de la cellule courante ne sont pas disponibles, l'utilisateur ne dispose d'aucune information de localisation.

Le document US2003119524 décrit des communications sans fil et plus particulièrement un procédé de détermination de la position d'un terminal mobile de communication sans fil fonctionnant dans un système de communication à commutation de paquets.

Le document US2012295641 décrit un dispositif de communication sans fil, et plus particulièrement un dispositif de communication sans fil, un dispositif de traitement d'informations, un système de communication et un procédé de détermination d'emplacement qui déterminent l'emplacement d'un dispositif sans fil.

La présente invention vient améliorer la situation.

A cet effet, un premier aspect de l'invention concerne un procédé de localisation d'un terminal équipé d'une carte UICC, connecté à un réseau cellulaire de télécommunications, et situé dans une cellule courante, le terminal mémorisant dans la carte UICC un identifiant de la cellule courante et au moins un identifiant d'une cellule précédente dans laquelle le terminal était précédemment situé. Ce procédé comporte les étapes suivantes, mises en oeuvre par un serveur de traitement connecté audit réseau :
- réception desdits identifiants reçus du terminal via le réseau de communication ;
- estimation d'une information de localisation du terminal à partir de coordonnées de localisation associées à au moins une cellule précédente identifiée par un identifiant mémorisé dans le terminal.

Il est donc possible d'estimer une information de localisation du terminal même si les coordonnées de localisation de la cellule courante ne sont pas disponibles. En effet, la carte UICC ayant mémorisé les identifiants de cellule des cellules précédentes, ces identifiants sont toujours disponibles. Ils peuvent donc servir pour estimer une information de localisation du terminal.

Le stockage de ces identifiants au niveau de la carte UICC peut être imposé pour la mise en oeuvre d'autres applications, telles que des applications relatives à la surveillance du réseau. L'utilisation des données stockées dans la carte UICC pour l'estimation est donc complétement transparente quant à l'activité du terminal, ces identifiants étant de toute façon acquis et stockés sur la carte UICC. L'impact de la mise en oeuvre de la présente invention sur le fonctionnement du terminal, en particulier en termes de capacités de calcul et de stockage, est donc très réduit.

Par ailleurs, l'estimation d'une information de localisation augmente sensiblement la qualité de service perçue par l'utilisateur. En effet, à un instant donné, même si les coordonnées de localisation de la cellule courante ne sont pas disponibles, l'utilisateur peut être localisé.

Par exemple, un utilisateur du terminal qui voyage en train de Paris à Munich peut vouloir savoir, à un instant t compris dans les 6 heures que dure le trajet, où il se situe. Si, à cet instant t, il n'est pas possible de connaître les coordonnées de la cellule courante, l'utilisateur ne peut se situer à aucun endroit entre Paris et Munich. Or, à l'instant t, cet utilisateur a déjà traversé de nombreuses cellules, à partir desquelles une information de localisation peut être estimée. Ainsi, en estimant une information à partir de l'identifiant d'au moins une cellule précédente stocké dans la carte UICC de son terminal, l'utilisateur peut, en consultant cette information, avoir une idée de sa localisation entre Paris et Munich.

A noter ici, que dans le cadre de la présente invention un terminal équipé d'une carte UICC peut être un terminal de communication cellulaire tel qu'un téléphone (3G, UMTS, LTE ...), mais également un simple équipement muni d'une carte UICC, sous forme par exemple d'une étiquette électronique (*electronic tag*), servant notamment à surveiller à distance l'équipement. Il peut s'agir par exemple de valises (pour le suivi du transport de bagages dans un aéroport) ou de capteurs de types variés devant être gérés à distance. La présente invention vise donc des applications de géolocalisation de terminaux de télécommunications mais également des applications de gestion ou de surveillance à distance d'équipements variés non téléphoniques (applications de communication machine à machine - M2M).

Dans ce contexte, un utilisateur du procédé de localisation selon l'invention peut être en particulier un utilisateur d'un terminal de téléphonie cellulaire ou bien un employé d'une société de surveillance/gestion à distance d'un ensemble d'objets/équipements munis chacun d'une carte UICC, utilisant les informations fournies par un serveur de traitement selon l'invention. L'invention est décrite dans les revendications. Dans un mode de réalisation, l'estimation de l'information de localisation est effectuée à partir de coordonnées de localisation associées à la dernière cellule dans laquelle le terminal était situé. Ainsi, une estimation de la localisation du terminal est très facilement disponible même lorsque les coordonnées de la cellule courante ne sont pas disponibles.

Dans un autre mode de réalisation, l'estimation de l'information de localisation comporte les sous-étapes de :
- détermination d'une trajectoire de déplacement du terminal à partir de coordonnées de localisation associées à au moins deux cellules dans lesquelles le terminal était précédemment situé ;
- estimation de l'information de localisation à partir de la trajectoire déterminée.

On entend par « trajectoire de déplacement du terminal », la trajectoire obtenue en reliant les positions géographiques déterminées à partir des identifiants de cellules successivement traversées par le terminal. Plusieurs modèles géométriques peuvent être retenus pour établir la trajectoire de déplacement d'un terminal à travers des cellules.

Un exemple de modèle géométrique est celui d'une droite. Si le déplacement du terminal est rectiligne, la trajectoire que suit le terminal est une droite et l'information de localisation estimée se situe alors dans un voisinage de cette droite.

Un autre exemple de modèle géométrique est celui d'une courbe. D'autres exemples de manières de calculer la trajectoire de déplacement du terminal sont donnés ci-après.

La précision de l'estimation de l'information de localisation est ainsi améliorée. En effet, comme cela est expliqué en détail ci-après, il est pertinent de considérer que la trajectoire du terminal reste constante lorsqu'il passe de la dernière cellule visitée à la cellule courante. Les zones qui ne sont pas conformes à la trajectoire de déplacement sont ainsi écartées et l'estimation de l'information de localisation est donc plus précise.

Dans un mode de réalisation, la trajectoire du terminal est déterminée à partir d'un modèle géométrique établi à partir des coordonnées de localisation associées à au moins trois cellules précédentes. L'information de localisation estimée comporte alors un ensemble de coordonnées de localisation du terminal correspondant à des positions géographiques dont l'étalement dans l'espace dépend d'un écart entre les coordonnées de localisation associées aux trois cellules précédentes et le modèle géométrique considéré.

On entend par « étalement de l'ensemble des coordonnées de localisation estimée pour le terminal » l'importance de la surface de la zone géographique dans laquelle se situe l'ensemble des positions considérées. Ainsi, on considère que les coordonnées de localisation d'un terminal sont étalées lorsque la surface de la zone correspondante est importante, et elles ne sont pas étalées lorsque ladite surface est réduite.

L'écart entre les coordonnées de localisation associées aux trois cellules précédentes et le modèle géométrique est caractéristique de la fiabilité de l'estimation de l'information de localisation. Cet écart peut correspondre, selon les cas, à une distance moyenne entre les coordonnées de localisation associées aux trois cellules précédentes et des coordonnées de localisation calculées selon le modèle géométrique considéré, à un pourcentage de coordonnées de localisation non-conforme au modèle géométrique, ou à toute autre manière d'estimer la pertinence du modèle géométrique utilisé par rapport aux coordonnées de localisation obtenues à partir des identifiants de cellule.

En faisant dépendre la fiabilité de l'estimation d'une caractéristique d'étalement des coordonnées de localisation, la probabilité que le terminal soit situé à un endroit qui corresponde effectivement à l'information de localisation est maximisée. En outre, un utilisateur du procédé selon l'invention peut savoir rapidement et facilement si l'information de localisation qui lui est proposée est précise (typiquement l'affichage d'un cercle dont le rayon varie en fonction de l'étalement des coordonnées de localisation).

Dans un autre mode de réalisation, l'information de localisation est en outre estimée à partir d'une mesure de durée entre deux changements de cellules successifs du terminal. La prise en compte de cette durée rend possible l'amélioration de la précision de l'information de localisation estimée.

Dans un mode de réalisation, entre l'étape de réception et l'étape d'estimation, le procédé comporte en outre des étapes de :
- envoi, à un référentiel d'identifiants de cellules, d'une requête pour l'obtention de coordonnées de localisation associées à la cellule courante et de coordonnées de localisation associées à la cellule précédente, la requête comportant l'identifiant de la cellule courante et l'identifiant de la cellule précédente ;
- réception d'une réponse à la requête, la réponse comportant les coordonnées de localisation associées à la cellule courante et les coordonnées de localisation associées à la cellule précédente. L'information de localisation est alors estimée à partir des coordonnées de localisation associées à la cellule précédente.

Ainsi, il est possible d'externaliser la gestion des données relatives aux cellules et donc d'utiliser des bases de données pouvant répertorier des données relatives aux cellules du monde entier, par exemple.

Dans un autre mode de réalisation, le procédé comporte en outre une étape de mise à jour d'un référentiel d'identifiants de cellules par ajout de l'identifiant de la cellule courante dans le cas où cet identifiant est inconnu du référentiel. Le simple fait qu'un identifiant de cellule soit transmis au référentiel permet d'établir que cette cellule existe et qu'elle est active. Le référentiel est donc dynamiquement mis à jour en étant ainsi informé en temps réel de l'apparition de nouvelles cellules.

Dans un mode de réalisation, la procédé comporte en outre des étapes de :
- détermination d'une information théorique de localisation à partir de l'identifiant de la cellule courante, l'information de localisation étant déterminée à partir des coordonnées de localisation associées à la cellule courante, les coordonnées étant extraites d'un référentiel d'identifiants de cellules ;
- détection d'une erreur de localisation si l'information estimée de localisation et l'information théorique de localisation diffèrent.

L'information de localisation déterminée à partir de l'identifiant de la cellule courante, ici « information théorique de localisation», peut-être erronée. Ces erreurs peuvent être introduites par une renumérotation des identifiants de cellules ou plus généralement par un référentiel obsolète d'identifiants de cellules. Pour vérifier la pertinence de cette information, il est possible de la comparer à l'information de localisation estimée à partir d'au moins un identifiant de cellule précédente.

Ainsi, l'utilisateur ne se voit plus présenter d'information de localisation qui soit complètement incohérente avec la position effective du terminal. La qualité perçue par cet utilisateur est donc sensiblement améliorée.

Par exemple, au moment où les identifiants de cellules sont renumérotés, la première information de localisation déterminée à partir de l'identifiant de la cellule courante ne peut pas correspondre à l'endroit où est effectivement situé le terminal. Or, en comparant cette information à une deuxième information de localisation estimée à partir de l'identifiant d'une cellule précédente, on détecte tout de suite que l'information de localisation théorique est erronée.

En particulier, dans le cas d'une renumérotation, il est possible que l'information de localisation estimée soit également erronée. Il est toutefois très improbable que les deux erreurs se compensent et que les deux informations de localisation correspondent à des positions géographiques similaires.

De plus, dans le cas où une erreur de localisation est détectée, le procédé peut en outre comporter une étape de mise à jour du référentiel d'identifiants de cellules à partir de l'information estimée de localisation.

Le référentiel est donc corrigé en temps réel. Ainsi, d'une part, le procédé rend possible la détection d'erreurs de localisation et, d'autre part, corrige le référentiel pour que de telles erreurs ne soit pas reproduites, notamment pour des terminaux qui ne mettraient pas en oeuvre de procédé de détection d'erreur.

Dans un mode de réalisation, le procédé comporte en outre, postérieurement à l'étape d'estimation, une étape de transmission de l'information de localisation au terminal. Ainsi, un utilisateur du terminal peut accéder à l'information de localisation estimée.

Un second aspect de l'invention concerne un programme informatique comportant des instructions pour la mise en oeuvre du procédé selon le premier aspect de l'invention, lorsque ces instructions sont exécutées par un processeur.

Un troisième aspect de l'invention concerne un serveur de traitement connecté à un réseau cellulaire de télécommunications, pour la localisation d'au moins un terminal équipé d'une carte UICC et situé dans une cellule courante, le terminal mémorisant dans la carte UICC un identifiant de la cellule courante et au moins un identifiant d'une cellule précédente dans laquelle le terminal était précédemment situé. Conformément à l'invention, le serveur précité comporte au moins un processeur agencé pour effectuer des opérations de :
- réception des identifiants reçus du terminal via le réseau de communication ;
- estimation d'une information de localisation du terminal à partir de coordonnées de localisation associées à au moins une cellule précédente identifiée par un identifiant mémorisé dans le terminal.

Un quatrième aspect de l'invention concerne un serveur de stockage comportant un référentiel d'identifiants de cellules, connecté par un réseau de communications au serveur de traitement selon le troisième aspect de l'invention, comportant un processeur agencé pour effectuer des opérations de :
- réception d'une requête pour l'obtention de coordonnées de localisation associées à la cellule courante et de coordonnées de localisation associées à la cellule précédente, la requête comportant l'identifiant de la cellule courante et l'identifiant de la cellule précédente ;
- envoi d'une réponse à la requête, la réponse comportant les coordonnées de localisation associées à la cellule courante et les coordonnées de localisation associées à la cellule précédente, l'information de localisation étant estimée à partir des coordonnées de localisation associées à la cellule précédente.

Un cinquième aspect de l'invention concerne un dispositif de localisation compris dans un terminal équipé d'une carte UICC, connecté à un réseau cellulaire de télécommunications, et situé dans une cellule courante, le terminal mémorisant dans la carte UICC un identifiant de la cellule courante et au moins un identifiant d'une cellule précédente dans laquelle le terminal était précédemment situé. Selon l'invention, ce dispositif de localisation comporte un microcontrôleur agencé pour effectuer des étapes de :
- réception desdits identifiants reçus du terminal via le réseau de communication ;
- estimation d'une information de localisation du terminal à partir de coordonnées de localisation associées à au moins une cellule précédente identifiée par un identifiant mémorisé dans le terminal.

Les avantages procurés par un programme informatique, un serveur de traitement, un serveur de stockage, un dispositif de localisation, selon l'invention, sont identiques à ceux, exposés plus haut, en relation avec le procédé de localisation d'un terminal, selon l'invention, et ne seront par conséquent pas rappelés ici.

D'autres caractéristiques et avantages de l'invention apparaîtront à l'examen de la description détaillée ci-après, et des dessins annexés sur lesquels:
- la figure 1 illustre un contexte de mise en oeuvre de l'invention, selon un mode de réalisation ;
- la figure 2 est un diagramme illustrant les étapes d'un procédé de localisation, selon un mode de réalisation de l'invention ;
- la figure 3 est un diagramme illustrant les étapes d'estimation d'une information de localisation, selon un mode de réalisation de l'invention ;
- la figure 4A est un schéma représentant un ensemble de cellules dans lesquelles le terminal est localisé, selon un premier mode de réalisation de l'invention ;
- la figure 4B est un schéma représentant un ensemble de cellules dans lesquelles le terminal est localisé, selon un deuxième mode de réalisation de l'invention ;
- la figure 5 illustre un microcontrôleur, selon un mode de réalisation de l'invention.

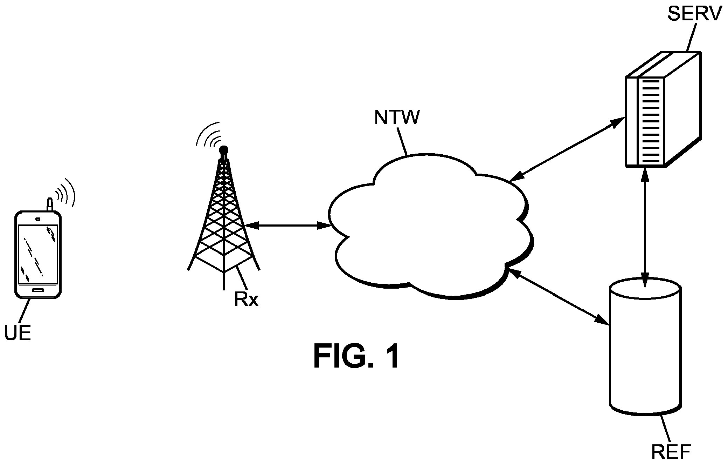

La **figure 1** détaille les différents dispositifs impliqués lorsque l'invention est mise en oeuvre. Sur cette figure, un terminal UE est relié à un réseau NTW via une antenne Rx. Cette antenne Rx est typiquement comprise dans une station de base qui couvre une cellule. Comme évoqué ci-avant le réseau NTW peut être de type GSM, UMTS ou encore LTE. Un serveur de traitement SERV est relié au réseau NTW et à un serveur de stockage comportant un référentiel d'identifiants de cellules REF.

L'invention est décrite ci-après dans son application, non limitative, à la situation dans laquelle le procédé de localisation est mis en oeuvre au niveau du serveur SERV. Le procédé de localisation, et notamment les étapes d'estimation de l'information de localisation, peuvent également être mises en oeuvre au niveau du terminal, au niveau de la station de base ou de tout dispositif relié au réseau NTW.

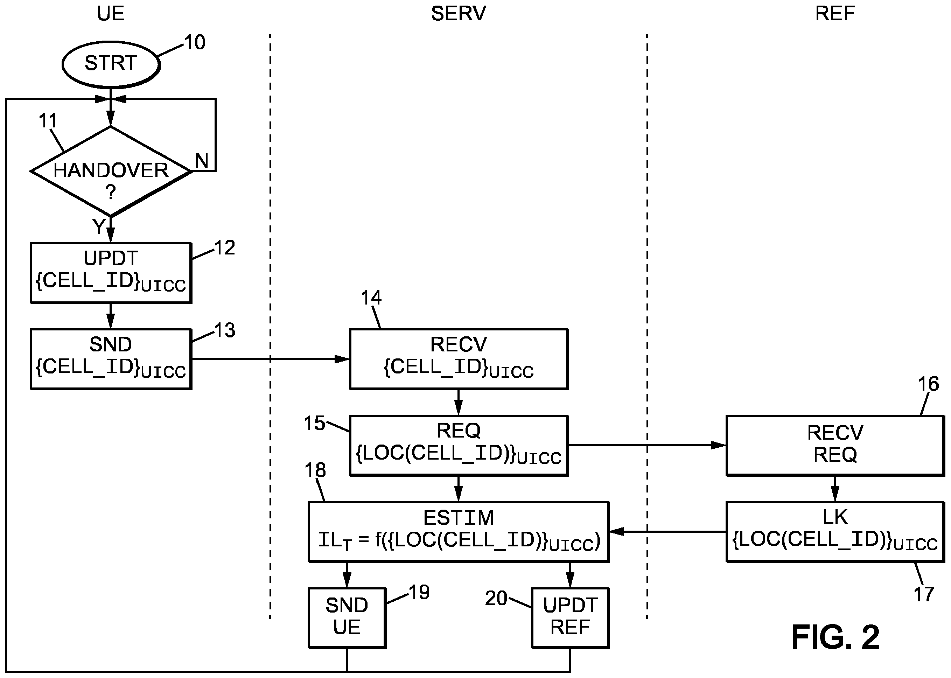

La **figure 2** détaille les étapes mises en oeuvre par le procédé de localisation, selon un mode de réalisation.

Le procédé début à une étape 10 à partir de laquelle le terminal UE détecte, au cours d'un test 11, si le terminal change de cellule.

Si un changement de cellule est détecté (Y), un nouvel identifiant de cellule est reçu de la station de base couvrant la nouvelle cellule, ici appelée cellule courante. Comme expliqué ci-avant, l'identifiant de la cellule est typiquement envoyé en mode broadcast sur un canal de synchronisation par la station de base couvrant la cellule. Cet identifiant de cellule est alors stocké dans la carte UICC du terminal, à l'étape 12.

La carte UICC comporte les identifiants de plusieurs cellules précédentes, trois par exemple. Ainsi, quand la valeur de la cellule courante est mise à jour dans la carte UICC, à l'étape 12, l'identifiant de la cellule précédente la plus ancienne est supprimé.

A l'étape 13, les identifiants {CELL_ID}_{UICC} de cellule stockés sur la carte UICC sont transmis au serveur SERV. La transmission de ces données peut être faite au moyen du réseau NTW ou via le réseau internet, typiquement lorsque le terminal UE est relié au réseau internet par un câble Ethernet ou une connexion Wi-Fi.

A l'étape 14, les identifiants {CELL_ID}_{UICC} sont reçus par le serveur de traitement SERV. Une requête pour l'obtention de coordonnées de localisation {LOC(CELL_ID)}_{UICC} liées aux identifiants {CELL_ID}_{UICC} est alors envoyée, lors d'une étape 15, au référentiel d'identifiants de cellules REF. Les coordonnées de localisation {LOC(CELL_ID)}_{UICC} correspondent aux coordonnées de localisation associées à la cellule courante et aux coordonnées de localisation associées aux cellules précédentes pour lesquelles l'identifiant CELL_ID a été mémorisé dans la carte UICC. La requête comporte l'identifiant CELL_ID_{T} de la cellule courante et les identifiants CELL_ID_{T-1} ; CELL_ID_{T-2} ; CELL_ID_{T-3} des cellules précédentes pour lesquelles l'identifiant a été mémorisé dans la carte UICC.

A une étape 16, la requête est reçue par le référentiel REF et les coordonnées de localisation {LOC(CELL_ID)}_{UICC} sont extraites du référentiel avant d'être envoyées au serveur SERV lors d'une étape 17. Le simple fait qu'un identifiant de cellule soit transmis au référentiel permet d'établir que cette cellule existe et qu'elle est active. Le référentiel est donc dynamiquement mis à jour en temps réel de l'apparition de nouvelles cellules.

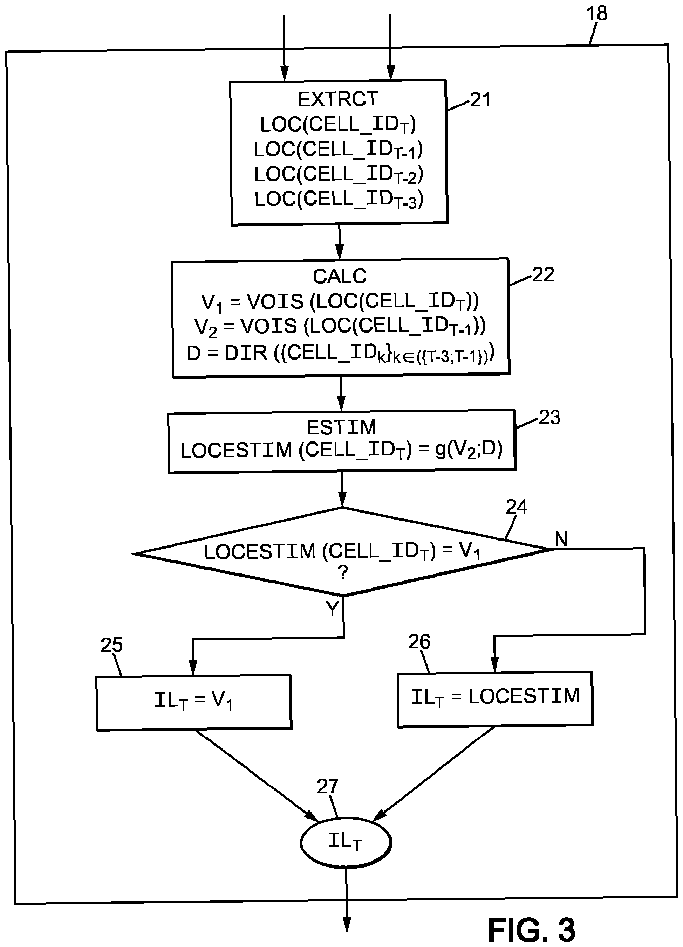

L'information de localisation IL_{T} du terminal est alors estimée dans le serveur SERV à l'étape 18. Le détail de cette étape est donné ci-après en référence à la figure 3. L'information de localisation IL_{T} est alors envoyée au terminal UE à l'étape 19 et/ou envoyée, à l'étape 20, au référentiel REF afin qu'il soit mis à jour. Le référentiel est donc corrigé en temps réel. Ainsi, d'une part, le procédé exposé rend possible la détection d'erreurs de localisation et, d'autre part, corrige le référentiel pour que de telles erreurs ne soient pas reproduites, notamment vis-à-vis de terminaux qui ne mettraient pas en oeuvre de procédé de détection d'erreur.

Cette information de localisation correspond à une zone dans laquelle on estime que le terminal est situé. Elle peut prendre différentes formes. Il peut s'agir de coordonnées de localisation, de références auxquelles sont associées des positions géographiques, etc. L'information de localisation peut également comporter des informations supplémentaires relatives à la présence du terminal dans la zone, par exemple la puissance d'émission des antennes du terminal, la fréquence utilisée par ce terminal, le fait que ce terminal soit en itinérance (*roaming*), etc.

En variante, les étapes 14, 15, 18, 19 et 20 sont directement mises en oeuvre par le terminal UE.

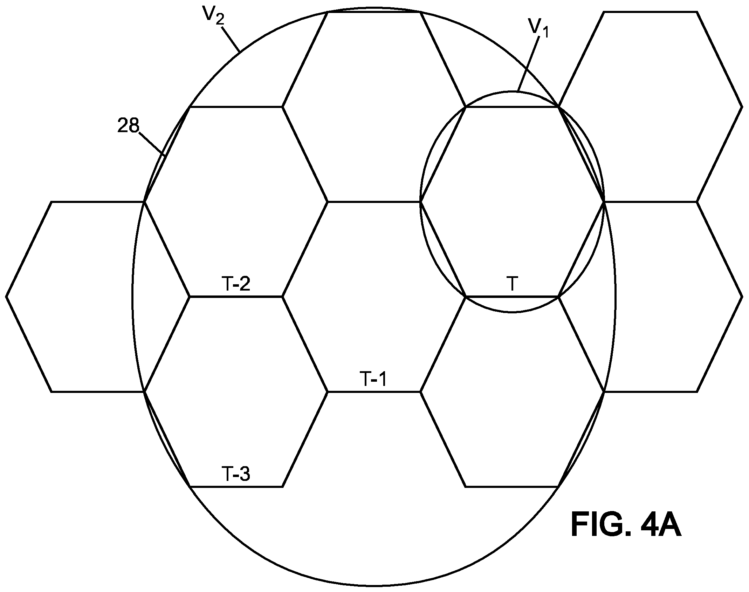

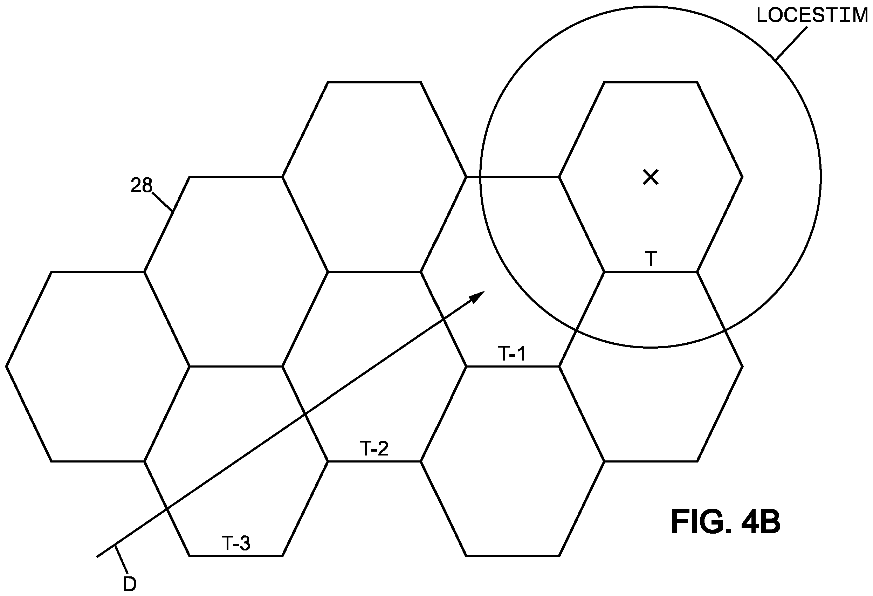

La **figure 3** détaille les étapes mises en oeuvre pour estimer l'information de localisation IL_{T} à l'étape 18. La figure 3 est ici décrite en combinaison avec les **figures 4A** et **4B** qui représentent un ensemble 28 de cellules couvertes par le réseau NTW. On distingue en particulier les cellules T-3, T-2, T-1 et T qui sont, dans ce mode de réalisation, les cellules parcourues par le terminal UE (dans l'ordre : T-3 puis T-2 puis T-1 puis T). La cellule T correspond donc à la cellule courante, la cellule T-1 correspond à la dernière cellule dans laquelle le terminal était situé avant d'être dans la cellule courante, etc.

Les coordonnées de localisation {LOC(CELL_ID)}_{UICC} sont reçues dans le serveur SERV, en provenance du référentiel REF et les identifiants de cellule {CELL_ID}_{UICC} sont reçus du référentiel REF et/ou déjà présentes dans le serveur SERV suite à l'étape de réception 14. A l'étape 21, les coordonnées de localisation LOC(CELL_ID_{T}) de la cellule courante T, les coordonnées de localisation LOC(CELL_ID_{T-1}) de la dernière cellule T-1 et les coordonnées de localisation LOC(CELL_ID_{T-2}), LOC(CELL_ID_{T-3}) des cellules T-2 et T-3 sont extraites.

A l'étape 22, les zones géographiques V₁ et V₂ ainsi que la trajectoire D sont calculées.

V₁ correspond à la zone géographique couverte par la cellule courante. L'information de localisation associée à V₁ correspond directement à LOC(CELL_ID_{T}), c'est-à-dire aux coordonnées de localisation obtenues du référentiel REF suite à l'envoi de l'identifiant CELL_ID_{T}.

La zone V₁ fournit donc directement une information de localisation du terminal puisque V₁ correspond à la localisation de la cellule courante dans laquelle est situé le terminal. Toutefois, il est possible que la zone V₁ soit erronée, typiquement parce que le référentiel REF n'est pas à jour pour l'identifiant CELL_ID_{T} de la cellule courante.

Sur la figure 4A, on a représenté la zone V₁ dans la situation où les coordonnées de localisation transmises par le référentiel REF pour l'identifiant CELL_ID_{T} sont exactes. Dans la situation où ces coordonnées LOC(CELL_ID_{T}) seraient inexactes, V₁ pourrait être représenté n'importe où sur la surface de la terre couverte par le réseau NTW.

V₂ correspond à une zone géographique où l'on estime, uniquement à partir des coordonnées de localisation de T-1, que le terminal peut se situer. Cette zone correspond à un cercle ayant un centre C et un rayon R :
- C peut être situé au centre de la cellule T-1, au niveau de la station de base couvrant la cellule T-1 ou encore au niveau d'une antenne couvrant au moins une partie de la cellule T-1 ;
- R peut être défini tel que R=R_{CELL}+D_{CELL} avec R_{CELL} le rayon moyen d'une cellule et D_{CELL} le diamètre moyen d'une cellule. R peut également être défini tel que R=2D_{CELL}.

Dans la mesure où le terminal est forcément passé de la cellule T-1 à une cellule adjacente à la cellule T-1, le terminal se situe nécessairement dans V₂.

Dans un premier mode de réalisation décrit ici en référence à la figure 4A, l'information de localisation correspond à V₂. L'information de localisation est donc directement estimée à partir des coordonnées de localisation LOC(CELL_ID)_{T-1} dans ce premier mode de réalisation.

Sur la figure 4B, la flèche D correspond à une trajectoire de déplacement du terminal qui est obtenue à partir des coordonnées de localisation LOC(CELL_ID_{T-1}), LOC(CELL_ID_{T-2}) et LOC(CELL_ID_{T-3}) respectivement associées aux cellules T-1, T-2 et T-3. La trajectoire D peut être calculée de différentes manières.

Une première manière consiste à trouver un modèle géométrique qui puisse approximer la trajectoire du terminal dans le plan des cellules (ce plan correspond à la surface de la terre). Typiquement, pour trouver ce modèle géométrique, on confronte plusieurs modèles géométriques connus aux coordonnées de localisation des cellules précédentes. Plus le nombre de cellules pour lesquelles on dispose de coordonnées de localisation est important, plus le modèle géométrique choisi donne des résultats exacts, c'est-à-dire s'approchant de la trajectoire effectivement suivie par le terminal..
- Un exemple de modèle géométrique est celui d'une droite. Si le déplacement du terminal est rectiligne, la trajectoire que suit le terminal est une droite et l'information de localisation estimée se situe alors dans un voisinage de cette droite. Cet exemple est ici représenté à la figure 4B pour laquelle l'étude des coordonnées de localisation des cellules T-1, T-2 et T-3 visitées par le terminal montre que la trajectoire suivie par ce terminal est une droite.
- Un autre exemple de modèle géométrique est celui d'une courbe.

Une seconde manière de déterminer une trajectoire de déplacement du terminal consiste à prendre en compte des données de contexte pour construire un modèle contextuel de déplacement du terminal.
- Un exemple typique de modèle contextuel est celui qui prend en compte des données cartographiques intégrant les différentes voies de transport (routes, voies ferrées, voies fluviales, etc.) ou encore des éléments maritimes ou de relief (fleuves sans pont, chaîne de montagne, lac, océan, etc.). Dans cette situation, on peut estimer que le déplacement du terminal est dicté par ces éléments topographiques. Il est par exemple logique que le terminal ne se déplace pas vers une cellule qui n'est pas sur le tracé de la route empruntée par l'utilisateur du terminal ou que le terminal ne se déplace pas dans une zone de montagne qui est inaccessible en train.
- Un autre exemple de modèle contextuel est celui qui prend en compte des données statistiques propres à l'utilisateur du terminal. De telles données statistiques peuvent concerner les habitudes de transport de l'utilisateur (transports en commun, marche, etc.), les caractéristiques physiques de l'utilisateur (personne à mobilité réduite, personne très sportive, etc.) ou encore la vie sociale de l'utilisateur (localisation des habitations des amis de l'utilisateur, lieu d'habitation de l'utilisateur, lieu de travail de l'utilisateur, etc.).

Les deux manières susmentionnées de détermination d'une trajectoire de déplacement du terminal peuvent se combiner, le modèle géométrique peut typiquement être pondéré par des données de contexte. Il est également possible de prendre en compte des données d'ordre technologique relatives au réseau NTW, par exemple. Dans de nombreuses situations, des réseaux de différents types se chevauchent et le recoupement de données entre les différents types de réseau peut par exemple permettre d'affiner un modèle géométrique établi pour modéliser le déplacement du terminal.

A une étape 23, la trajectoire D, qui est donc établie au moins à partir des coordonnées de localisation des cellules précédemment visitées par le terminal, est alors utilisée pour estimer la localisation LOCESTIM du terminal. Cette estimation est fonction (fonction "g") de la trajectoire D et de la zone V₂ où l'on estime que le terminal peut être situé.

Par exemple, sur la figure 4B, en recoupant les données relatives à la trajectoire D du terminal et les données relatives à la dernière cellule visitée, on peut estimer que le terminal se situe dans la zone géographique LOCESTIM. Cette zone LOCESTIM est plus précise que la zone V₂ (figure 4A).

Dans un second mode de réalisation, en référence à la figure 4B, l'information de localisation correspond à l'ensemble des coordonnées de localisation qui permettent de définir la zone LOCESTIM.

Le calcul de la zone LOCESTIM peut également prendre en compte une mesure de durée entre deux changements de cellules successifs. En effet, la durée écoulée entre le changement de cellule T-2 vers T-1 et le changement cellule T-1 vers T, peut être mesurée.

En calculant la distance parcourue entre le moment où le changement de cellule est détecté et le moment où l'information de localisation est envoyée au terminal (étape 19, figure 2, décrite ci-après) il est possible d'affiner la position estimée pour le terminal. Cette distance est déterminée par un calcul de type : distance = vitesse x temps. La vitesse est déterminée à partir de la mesure de la durée entre les deux changements de cellule, si le rayon moyen d'une cellule est connu. Alternativement, si la vitesse est connue, il est possible de calculer le rayon de la cellule précédente T-1.

Dans une variante de ce second mode de réalisation, l'importance de la surface (étalement) occupée par la zone LOCESTIM dépend d'un écart entre les coordonnées de localisation associées aux cellules précédentes et le modèle choisi pour modéliser la trajectoire D.

L'écart entre les coordonnées de localisation associées aux cellules précédentes et le modèle géométrique est caractéristique de la fiabilité de l'estimation de l'information de localisation. Cet écart peut correspondre :
- à une distance moyenne entre les coordonnées de localisation associées aux trois cellules précédentes et des coordonnées de localisation calculées selon le modèle géométrique ;
- à un pourcentage de coordonnées de localisation non-conformes au modèle géométrique.

On peut utiliser cependant toute autre manière d'estimer la pertinence du modèle géométrique par rapport aux coordonnées de localisation obtenues à partir des identifiants de cellule.

A une étape 24, un test est effectué pour savoir si l'information estimée de localisation à laquelle est associé la zone LOCESTIM et l'information théorique de localisation à laquelle est associée la zone V₁ correspondent à des positions géographiques différentes.

On considère que les deux informations de localisation (estimée et théorique) auxquelles sont associées les zones géographiques (respectivement LOCESTIM et V₁) correspondent à des positions différentes quand la surface de l'intersection des deux zones est inférieure à une valeur seuil. Cette valeur seuil est typiquement choisie pour correspondre à la surface moyenne d'une cellule.

Si les positions géographiques correspondent, l'information théorique de localisation associée à V₁ est considérée comme étant exacte. Dès lors, cette information de localisation est retenue, à l'étape 25, comme information de localisation IL_{T} vérifiée.

Si les positions géographiques diffèrent, l'information théorique de localisation associée à V₁ est une information de localisation erronée. Dès lors, cette information de localisation ne peut être retenue. L'information estimée de localisation associée à LOCESTIM est donc retenue, à l'étape 26, comme information de localisation IL_{T} vérifiée.

Dans un autre mode de réalisation, selon lequel l'étape de test 24 et les étapes d'affectation 25 et 26 ne sont pas mises en oeuvre, l'information de localisation retenue IL_{T} est directement l'information estimée de localisation associée à LOCESTIM.

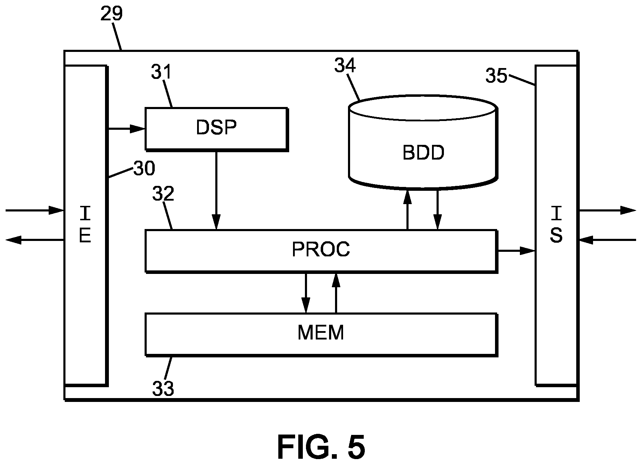

La **figure 5** représente un exemple de dispositif 29 pour la mise en oeuvre de tout ou partie des étapes du procédé décrit ci-avant. Ce dispositif peut par exemple être compris dans le serveur de traitement SERV ou directement dans le terminal UE pour effectuer les étapes 14, 15, 18, 19 et 20. Ce dispositif 29 peut prendre la forme d'un boitier comprenant des circuits imprimés, de tout type d'ordinateur ou encore d'un téléphone mobile.

Le dispositif 29 comprend une mémoire vive 33 pour stocker des instructions pour la mise en oeuvre par un processeur 32 du procédé de localisation du terminal tel que décrit ci-avant. Le dispositif comporte aussi une mémoire de masse 34 pour le stockage de données destinées à être conservées après la mise en oeuvre du procédé.

Le dispositif 29 peut en outre comporter un processeur de signal numérique (DSP) 31. Ce DSP 31 reçoit des données d'entrées telles que les identifiants de cellule afin de mettre en oeuvre un traitement de ces données conforme à un procédé de localisation d'un terminal, selon l'invention.

Le dispositif 29 comporte également une interface d'entrée 30 pour la réception des données comprises sur la carte UICC et une interface de sortie 35 pour la transmission de l'information de localisation estimée et/ou vérifiée.

La présente invention ne se limite pas aux formes de réalisation décrites ci-avant à titre d'exemples ; elle s'étend à d'autres variantes.

Ainsi, on a décrit ci-avant un mode de réalisation dans lequel la transmission des identifiants était assurée par un lien radiofréquence. Bien sûr, ces transmissions peuvent être assurées par tout type de technique de communication telle que des communications filaires ou optiques.

De plus, dans le mode de réalisation décrit plus haut, un terminal (UE) localisé selon le procédé de l'invention, est équipé d'une carte UICC dans laquelle le terminal mémorise un identifiant (CELL_IDT) de la cellule courante et au moins un identifiant (CELL_IDT-1 ; CELL_IDT-2 ; CELL_IDT-3) d'une cellule précédente. Cependant, selon d'autres modes de réalisation, on peut prévoir que le terminal utilise pour la mémorisation des identifiants de cellule précités, un module logiciel et/ou matériel, désigné ici par « module de sécurité », ce module de sécurité étant distinct de la carte UICC.

Par conséquent, de manière générale, un terminal localisé selon le procédé de localisation de l'invention est équipé d'un module de nature matérielle et/ou logicielle, désigné ici par « module de sécurité », dans lequel le terminal mémorise des identifiants de cellule, et selon le mode de réalisation choisi, un tel module de sécurité peut comprendre une carte UICC, ou bien être distinct d'une carte UICC et, dans ce dernier cas, ce module peut être alors configuré pour mettre en oeuvre tout ou partie des fonctionnalités assurées par une carte UICC.

## Revendications

1. **Procédé** de localisation d'un terminal (UE) équipé d'un module de sécurité, connecté à un réseau cellulaire de télécommunications, et situé dans une cellule courante,
ledit terminal mémorisant dans ledit module de sécurité un identifiant (CELL_ID_{T}) de la cellule courante et au moins un identifiant (CELL_ID_{T-1} ; CELL_ID_{T-2} ; CELL_ID_{T-3}) d'une cellule précédente dans laquelle le terminal était précédemment situé ;
ledit procédé comportant des étapes mises en oeuvre par un serveur de traitement (SERV) connecté audit réseau, de :
- réception (14) desdits identifiants reçus du terminal via le réseau de communication ;
- estimation (18) d'une information de localisation du terminal à partir de coordonnées de localisation associées à au moins une cellule précédente identifiée par un identifiant mémorisé dans le terminal, sans utilisation des coordonnées de localisation de la cellule courante.

2. Procédé de localisation d'un terminal selon la revendication 1, dans lequel le module de sécurité est inclus dans une carte UICC comprise dans ledit terminal (UE).

3. Procédé de localisation d'un terminal selon la revendication 1 ou 2, dans lequel l'estimation de l'information de localisation est effectuée à partir de coordonnées de localisation (LOC(CELL_ID_{T})) associées à la dernière cellule dans laquelle le terminal était situé.

4. Procédé de localisation d'un terminal selon l'une des revendications 1 à 3, dans lequel l'estimation de l'information de localisation comporte les sous-étapes de :
• détermination d'une trajectoire (D) de déplacement du terminal à partir de coordonnées de localisation (LOC(CELL_ID_{T-1}); LOC(CELL_ID_{T-2}) ; LOC(CELL_ID_{T-3})) associées à au moins deux cellules dans lesquelles le terminal était précédemment situé ;
• estimation de l'information de localisation à partir de ladite trajectoire de déplacement.

5. Procédé de localisation d'un terminal selon la revendication 4, dans lequel la trajectoire du terminal est déterminée à partir d'un modèle géométrique établi à partir des coordonnées de localisation associées à au moins trois cellules précédentes, et
dans lequel l'information de localisation estimée comporte un ensemble de coordonnées de localisation du terminal dont l'étalement dépend d'un écart entre les coordonnées de localisation associées aux trois cellules précédentes et le modèle géométrique.

6. Procédé selon l'une des revendications précédentes, dans lequel l'information de localisation est en outre estimée à partir d'une mesure de durée entre deux changements de cellules successifs du terminal.

7. Procédé selon l'une quelconque des revendications précédentes, comportant en outre, entre l'étape de réception et l'étape d'estimation, des étapes de :
- envoi (15), à un référentiel d'identifiants de cellules (REF), d'une requête pour l'obtention de coordonnées de localisation associées à la cellule courante et de coordonnées de localisation associées à ladite au moins une cellule précédente, ladite requête comportant l'identifiant (CELL_ID_{T}) de la cellule courante et l'identifiant (CELL_ID_{T-1} ; CELL_ID_{T-2} ; CELL_ID_{T-3}) de ladite au moins une cellule précédente ;
- réception d'une réponse à ladite requête, la réponse comportant les coordonnées de localisation (LOC(CELL_ID_{T})) associées à la cellule courante et les coordonnées de localisation (LOC(CELL_ID_{T-1}) ; LOC(CELL_ID_{T-2}) ; LOC(CELL_ID_{T-3})) associées à ladite au moins une cellule précédente, l'information de localisation étant estimée à partir des coordonnées de localisation associées à ladite au moins une cellule précédente.

8. Procédé selon l'une quelconque des revendications précédentes, comportant en outre une étape (20) de mise à jour d'un référentiel d'identifiants de cellules par ajout de l'identifiant de la cellule courante dans le cas où cet identifiant est inconnu dudit référentiel.

9. Procédé selon l'une quelconque des revendications précédentes, comportant en outre des étapes de :
- détermination (21) d'une information théorique de localisation à partir de l'identifiant de la cellule courante, l'information de localisation étant déterminée à partir des coordonnées de localisation associées à la cellule courante, lesdites coordonnées étant extraites d'un référentiels d'identifiant de cellules ;
- détection (24) d'une erreur de localisation si l'information estimée de localisation et l'information théorique de localisation correspondent à des positions géographiques différentes.

10. Procédé selon la revendication 9, comportant en outre, dans le cas où une erreur de localisation est détectée, une étape (20) de mise à jour du référentiel d'identifiants de cellules à partir de l'information estimée de localisation.

11. Procédé selon l'une quelconque des revendications précédentes, comportant en outre, postérieurement à l'étape d'estimation, une étape de transmission de l'information de localisation au terminal.

12. **Programme** informatique comportant des instructions pour la mise en oeuvre du procédé selon l'une quelconque des revendications précédentes, lorsque ces instructions sont exécutées par un processeur.

13. **Serveur de traitement** (SERV) connecté à un réseau cellulaire de télécommunications, pour la localisation d'au moins un terminal (UE) équipé d'un module de sécurité et situé dans une cellule courante,
ledit terminal mémorisant dans ledit module de sécurité un identifiant de la cellule courante et au moins un identifiant d'une cellule précédente dans laquelle le terminal était précédemment situé ;
le serveur comportant au moins un processeur agencé pour effectuer des opérations de :
- réception desdits identifiants reçus du terminal via le réseau de communication ;
- estimation d'une information de localisation du terminal à partir de coordonnées de localisation associées à au moins une cellule précédente identifiée par un identifiant mémorisé dans le terminal, sans utilisation des coordonnées de localisation de la cellule courante.

14. **Serveur de stockage** comportant un référentiel d'identifiants de cellules (REF), connecté par un réseau de communications au serveur de traitement (SERV) selon la revendication 13, comportant un processeur agencé pour effectuer des opérations de :
- réception d'une requête pour l'obtention de coordonnées de localisation associées à la cellule courante et de coordonnées de localisation associées à ladite au moins une cellule précédente, ladite requête comportant l'identifiant (CELL_ID_{T}) de la cellule courante et l'identifiant (CELL_ID_{T-1} ; CELL_ID_{T-2} ; CELL_ID_{T-3}) de ladite au moins une cellule précédente ;
- envoi d'une réponse à ladite requête, la réponse comportant les coordonnées de localisation (LOC(CELL_ID_{T})) associées à la cellule courante et les coordonnées de localisation (LOC(CELL_ID_{T-1}) ; LOC(CELL_ID_{T-2}) ; LOC(CELL_ID_{T-3})) associées à ladite au moins une cellule précédente, l'information de localisation étant estimée à partir des coordonnées de localisation associées à ladite au moins une cellule précédente.

15. **Dispositif** de localisation compris dans un terminal (UE) équipé d'un module de sécurité, connecté à un réseau cellulaire de télécommunications, et situé dans une cellule courante, ledit terminal mémorisant dans ledit module de sécurité un identifiant (CELL_ID_{T}) de la cellule courante et au moins un identifiant (CELL_ID_{T-1} ; CELL_ID_{T-2} ; CELL_ID_{T-3}) d'une cellule précédente dans laquelle le terminal était précédemment situé ;
ledit dispositif comportant un microcontrôleur agencé pour effectuer des étapes de :
- réception (14) desdits identifiants reçus du terminal via le réseau de communication ;
- estimation (18) d'une information de localisation du terminal à partir de coordonnées de localisation associées à au moins une cellule précédente identifiée par un identifiant mémorisé dans le terminal, sans utilisation des coordonnées de localisation de la cellule courante

16. Dispositif selon la revendication 15, dans lequel ledit module de sécurité est compris dans une carte UICC dudit terminal.

## Patentansprüche

1. Verfahren zur Lokalisierung eines mit einem Sicherheitsmodul ausgestatteten Endgeräts (UE), das an ein Mobilfunknetz angeschlossen ist und sich in einer aktuellen Zelle aufhält,
wobei das Endgerät in dem Sicherheitsmodul eine Kennung (CELL_ID_{T}) der aktuellen Zelle und mindestens eine Kennung (CELL_ID_{T-1}, CELL_ID_{T-2}, CELL_ID_{T-3}) einer vorhergehenden Zelle, in der sich das Endgerät zuvor aufgehalten hat, speichert,
wobei das Verfahren die folgenden Schritte umfasst, die von einem an das Netz angeschlossenen Verarbeitungsserver (SERV) ausgeführt werden:
- Empfangen (14) der Kennungen, die vom Endgerät über das Kommunikationsnetz empfangen werden,
- Schätzen (18) einer Lokalisierungsinformation des Endgeräts ausgehend von Lokalisierungskoordinaten, die mindestens einer vorhergehenden Zelle zugeordnet sind, die durch eine im Endgerät gespeicherte Kennung identifiziert wird, ohne die Lokalisierungskoordinaten der aktuellen Zelle zu verwenden.

2. Verfahren zur Lokalisierung eines Endgeräts nach Anspruch 1, wobei das Sicherheitsmodul in eine UICC-Karte integriert ist, die im Endgerät (UE) enthalten ist.

3. Verfahren zur Lokalisierung eines Endgeräts nach Anspruch 1 oder 2, wobei das Schätzen der Lokalisierungsinformation ausgehend von Lokalisierungskoordinaten (LOC(CELL_ID_{T})) erfolgt, die der letzten Zelle zugeordnet sind, in der sich das Endgerät aufgehalten hat.

4. Verfahren zur Lokalisierung eines Endgeräts nach einem der Ansprüche 1 bis 3, wobei das Schätzen der Lokalisierungsinformation die folgenden Teilschritte umfasst:
- Bestimmen einer Bewegungsbahn (D) des Endgeräts ausgehend von den Lokalisierungskoordinaten (LOC(CELL_ID_{T-1}), LOC(CELL_ID_{T-2}), LOC(CELL_ID_{T-3})), die mindestens zwei Zellen zugeordnet sind, in denen sich das Endgerät zuvor aufgehalten hat,
- Schätzen der Lokalisierungsinformation ausgehend von der Bewegungsbahn.

5. Verfahren zur Lokalisierung eines Endgeräts nach Anspruch 4, wobei die Bahn des Endgeräts ausgehend von einem geometrischen Modell bestimmt wird, das ausgehend von den Lokalisierungsdaten erstellt wird, die mindestens drei vorhergehenden Zellen zugeordnet sind, und
wobei die geschätzte Lokalisierungsinformation mindestens eine Gruppe von Lokalisierungskoordinaten des Endgeräts umfasst, deren Verteilung von einem Abstand zwischen den Lokalisierungskoordinaten, die den drei vorhergehenden Zellen zugeordnet sind, und dem geometrischen Modell abhängt.

6. Verfahren nach einem der vorhergehenden Ansprüche, wobei die Lokalisierungsinformation darüber hinaus ausgehend von einer Messung der Dauer zwischen zwei Wechseln von aufeinander folgenden Zellen des Endgeräts geschätzt wird.

7. Verfahren nach einem der vorhergehenden Ansprüche, das darüber hinaus zwischen dem Empfangsschritt und dem Schätzschritt die folgenden Schritte umfasst:
- Senden (15) einer Anforderung zum Erhalten von Lokalisierungskoordinaten, die der aktuellen Zelle zugeordnet sind, und von Lokalisierungskoordinaten, die der mindestens einen vorhergehenden Zelle zugeordnet sind, an ein Zellenkennungsbezugssystem (REF), wobei die Anforderung die Kennung (CELL_ID_{T}) der aktuellen Zelle und die Kennung (CELL_ID_{T-1}, CELL_ID_{T-2}, CELL_ID_{T-3}) der
Empfangen einer Antwort auf die Anforderung, wobei die Antwort die Lokalisierungskoordinaten (LOC(CELL_ID_{T})), die der aktuellen Zelle zugeordnet sind, und die Lokalisierungskoordinaten (LOC(CELL_ID_{T}-₁), LOC(CELL_ID_{T-2}), LOC(CELL_ID_{T-3})), die der mindestens einen vorhergehenden Zelle zugeordnet sind, umfasst, wobei die Lokalisierungsinformation ausgehend von den Lokalisierungskoordinaten geschätzt wird, die der mindestens einen vorhergehenden Zelle zugeordnet sind.

8. Verfahren nach einem der vorhergehenden Ansprüche, das darüber hinaus einen Schritt (20) des Aktualisierens eines Zellenkennungsbezugssystems durch Hinzufügen der Kennung der aktuellen Zelle für den Fall, dass diese Kennung dem Bezugssystem nicht bekannt ist, umfasst.

9. Verfahren nach einem der vorhergehenden Ansprüche, das darüber hinaus die folgenden Schritte umfasst:
- Bestimmen (21) einer theoretischen Lokalisierungsinformation ausgehend von der Kennung der aktuellen Zelle, wobei die Lokalisierungsinformation ausgehend von den Lokalisierungskoordinaten bestimmt wird, die der aktuellen Zelle zugeordnet sind, wobei diese Koordinaten einem Zellenkennungsbezugssystem entnommen werden,
- Erkennen (24) eines Lokalisierungsfehlers, falls die geschätzte Lokalisierungsinformation und die theoretische Lokalisierungsinformation verschiedenen geografischen Positionen entsprechen.

10. Verfahren nach Anspruch 9, das darüber hinaus für den Fall, dass ein Lokalisierungsfehler erkannt wird, einen Schritt (20) des Aktualisierens des Zellenkennungsbezugssystems ausgehend von der geschätzten Lokalisierungsinformation umfasst.

11. Verfahren nach einem der vorhergehenden Ansprüche, das darüber hinaus nach dem Schätzschritt einen Schritt des Übertragens der Lokalisierungsinformation an das Endgerät umfasst.

12. Computerprogramm mit Anweisungen zur Umsetzung des Verfahrens nach einem der vorgehenden Ansprüche, wenn diese Anweisungen von einem Prozessor ausgeführt werden.

13. Verarbeitungsserver (SERV), der an ein Mobilfunknetz angeschlossen ist, zur Lokalisierung mindestens eines mit einem Sicherheitsmodul ausgestatteten Endgeräts (UE), das sich in einer aktuellen Zelle aufhält,
wobei das Endgerät in dem Sicherheitsmodul eine Kennung der aktuellen Zelle und mindestens eine Kennung einer vorhergehenden Zelle, in der sich das Endgerät zuvor aufgehalten hat, speichert,
wobei der Server mindestens einen Prozessor umfasst, der so gestaltet ist, dass er die folgenden Vorgänge ausführt:
- Empfangen der Kennungen, die vom Endgerät über das Kommunikationsnetz empfangen werden,
- Schätzen einer Lokalisierungsinformation des Endgeräts ausgehend von Lokalisierungskoordinaten, die mindestens einer vorhergehenden Zelle zugeordnet sind, die durch eine im Endgerät gespeicherte Kennung identifiziert wird, ohne die Lokalisierungskoordinaten der aktuellen Zelle zu verwenden.

14. Speicherserver mit einem Zellenkennungsbezugssystem (REF), der über ein Kommunikationsnetz an den Verarbeitungsserver (SERV) nach Anspruch 13 angeschlossen ist, umfassend einen Prozessor, der so gestaltet ist, dass er die folgenden Vorgänge ausführt:
- Empfangen einer Anforderung zum Erhalten von Lokalisierungskoordinaten, die der aktuellen Zelle zugeordnet sind, und von Lokalisierungskoordinaten, die der mindestens einen vorhergehenden Zelle zugeordnet sind, wobei die Anforderung die Kennung (CELL_ID_{T}) der aktuellen Zelle und die Kennung (CELL_ID_{T-1}, CELL_ID_{T-2}, CELL_ID_{T-3}) der mindestens einen vorhergehenden Zelle umfasst,
- Senden einer Antwort auf diese Anforderung, wobei die Antwort die Lokalisierungskoordinaten (LOC(CELL_ID_{T})), die der aktuellen Zelle zugeordnet sind, und die Lokalisierungskoordinaten (LOC(CELL_ID_{T-1}), LOC(CELL_ID_{T-2}), LOC(CELL_ID_{T-3})), die der mindestens einen vorhergehenden Zelle zugeordnet sind, umfasst, wobei die Lokalisierungsinformation ausgehend von den Lokalisierungskoordinaten geschätzt wird, die der mindestens einen vorhergehenden Zelle zugeordnet sind.

15. Lokalisierungsvorrichtung, die in einem mit einem Sicherheitsmodul ausgestatteten Endgerät (UE) enthalten ist, das an ein Mobilfunknetz angeschlossen ist und sich in einer aktuellen Zelle aufhält,
wobei das Endgerät in dem Sicherheitsmodul eine Kennung (CELL_ID_{T}) der aktuellen Zelle und mindestens eine Kennung (CELL_ID_{T-1}, CELL_ID_{T-2}, CELL_ID_{T-3}) einer vorhergehenden Zelle, in der sich das Endgerät zuvor aufgehalten hat, speichert,
wobei die Vorrichtung einen Mikrocontroller umfasst, der so gestaltet ist, dass er die folgenden Schritte ausführt:
- Empfangen (14) der Kennungen, die vom Endgerät über das Kommunikationsnetz empfangen werden,
- Schätzen (18) einer Lokalisierungsinformation des Endgeräts ausgehend von Lokalisierungskoordinaten, die mindestens einer vorhergehenden Zelle zugeordnet sind, die durch eine im Endgerät gespeicherte Kennung identifiziert wird, ohne die Lokalisierungskoordinaten der aktuellen Zelle zu verwenden.

16. Vorrichtung nach Anspruch 15, wobei das Sicherheitsmodul in einer UICC-Karte des Endgeräts enthalten ist.

## Claims

1. Method for locating a terminal (UE) equipped with a security module, which terminal is connected to a cellular telecommunications network and situated in a current cell,
said terminal storing, in said security module, an identifier (CELL_ID_{T}) of the current cell and at least one identifier (CELL_ID_{T-1}; CELL_ID_{T-2}; CELL_ID_{T-3}) of a previous cell in which the terminal was previously situated;
said method including steps, implemented by a processing server (SERV) connected to said network, of:
- receiving (14) said identifiers received from the terminal via the communication network;
- estimating (18) an item of information on the location of the terminal on the basis of location coordinates that are associated with at least one previous cell identified by an identifier stored in the terminal, without using location coordinates of the current cell.

2. Method for locating a terminal according to Claim 1, wherein the security module is included in a UICC card contained in said terminal (UE).

3. Method for locating a terminal according to Claim 1 or 2, wherein the estimation of the item of location information is performed on the basis of location coordinates (LOC(CELL_ID_{T})) that are associated with the last cell in which the terminal was situated.

4. Method for locating a terminal according to one of Claims 1 to 3, wherein the estimation of the item of location information includes the sub-steps of:
• determining a movement path (D) of the terminal on the basis of location coordinates (LOC(CELL_ID_{T-1}); LOC(CELL_ID_{T-2}) ; LOC(CELL_ID_{T-3})) that are associated with at least two cells in which the terminal was previously situated;
• estimating the item of location information on the basis of said movement path.

5. Method for locating a terminal according to Claim 4, wherein the path of the terminal is determined on the basis of a geometric model established on the basis of the location coordinates that are associated with at least three previous cells, and
wherein the item of estimated location information includes a set of location coordinates of the terminal, the spread of which depends on a difference between the location coordinates that are associated with the three previous cells and the geometric model.

6. Method according to one of the preceding claims, wherein the item of location information is furthermore estimated on the basis of a measurement of the duration between two successive cell changes of the terminal.

7. Method according to any one of the preceding claims, furthermore including, between the receiving step and the estimating step, steps of:
- sending (15), to a cell identifier frame of reference (REF), a request to acquire location coordinates that are associated with the current cell and location coordinates that are associated with said at least one previous cell, said request containing the identifier (CELL_ID_{T}) of the current cell and the identifier (CELL_ID_{T-1}; CELL_ID_{T-2}; CELL_ID_{T-3}) of said at least one previous cell;
- receiving a response to said request, the response containing the location coordinates (LOC(CELL_ID_{T})) that are associated with the current cell and the location coordinates (LOC(CELL_ID_{T-1}); LOC(CELL_ID_{T-2}); LOC(CELL_ID_{T-3})) that are associated with said at least one previous cell, the item of location information being estimated on the basis of the location coordinates that are associated with said at least one previous cell.

8. Method according to any one of the preceding claims, furthermore including a step (20) of updating a cell identifier frame of reference by adding the identifier of the current cell if this identifier is not known to said frame of reference.

9. Method according to any one of the preceding claims, furthermore including steps of:
- determining (21) a theoretical item of location information on the basis of the identifier of the current cell, the item of location information being determined on the basis of the location coordinates that are associated with the current cell, said coordinates being extracted from a cell identifier frame of reference;
- detecting (24) a location error if the estimated item of location information and the theoretical item of location information correspond to different geographical positions.

10. Method according to Claim 9, furthermore including, if a location error is detected, a step (20) of updating the cell identifier frame of reference on the basis of the estimated item of location information.

11. Method according to any one of the preceding claims, furthermore including, following the estimating step, a step of transmitting the item of location information to the terminal.

12. Computer program including instructions for implementing the method according to any one of the preceding claims, when these instructions are executed by a processor.

13. Processing server (SERV) connected to a cellular telecommunications network, for locating at least one terminal (UE) equipped with a security module and situated in a current cell,
said terminal storing, in said security module, an identifier of the current cell and at least one identifier of a previous cell in which the terminal was previously situated;
the server including at least one processor designed to perform operations of:
- receiving said identifiers received from the terminal via the communication network;
- estimating an item of information on the location of the terminal on the basis of location coordinates that are associated with at least one previous cell identified by an identifier stored in the terminal, without using location coordinates of the current cell.

14. Storage server including a cell identifier frame of reference (REF), connected by a communications network to the processing server (SERV) according to Claim 13, including a processor designed to perform operations of:
- receiving a request to acquire location coordinates that are associated with the current cell and location coordinates that are associated with said at least one previous cell, said request containing the identifier (CELL_ID_{T}) of the current cell and the identifier (CELL_ID_{T-1}; CELL_ID_{T-2}; CELL_ID_{T-3}) of said at least one previous cell;
- sending a response to said request, the response containing the location coordinates (LOC(CELL_ID_{T})) that are associated with the current cell and the location coordinates (LOC(CELL_ID_{T-1}); LOC(CELL_ID_{T-2}); LOC(CELL_ID_{T-3})) that are associated with said at least one previous cell, the item of location information being estimated on the basis of the location coordinates that are associated with said at least one previous cell.

15. Locating device contained in a terminal (UE) equipped with a security module, which device is connected to a cellular telecommunications network and situated in a current cell,
said terminal storing, in said security module, an identifier (CELL_ID_{T}) of the current cell and at least one identifier (CELL_ID_{T-1}; CELL_ID_{T-2}; CELL_ID_{T-3}) of a previous cell in which the terminal was previously situated;
said device including a microcontroller designed to perform steps of:
- receiving (14) said identifiers received from the terminal via the communication network;
- estimating (18) an item of information on the location of the terminal on the basis of location coordinates that are associated with at least one previous cell identified by an identifier stored in the terminal, without using location coordinates of the current cell.

16. Device according to Claim 15, wherein said security module is contained in a UICC card of said terminal.
